# EUROPEAN PATENT APPLICATION

(11) **EP 4 611 082 A1**
(43) Date of publication of application: **03.09.2025**
(21) Application number: 23882719.0
(22) Date of filing: 26.10.2023
(51) Int. Cl.: H01M 8/1004, C08G 65/42, H01B 1/06, H01M 4/86, H01M 8/1025

(54) **MEMBRANE ELECTRODE ASSEMBLY AND FUEL CELL**

(30) Priority: 28.10.2022 JP 2022172990
(71) Applicant: Toray Industries, Inc., Tokyo 103-8666 (JP)
(72) Inventor: SHINBA Yoichi, Otsu-shi, Shiga 520-2141 (JP); SAKAUE Tomohiro, Otsu-shi, Shiga 520-8558 (JP); KOBAYASHI Toru, Otsu-shi, Shiga 520-8558 (JP)
(74) Representative: Kador & Partner Part mbB
(86) International application number: PCT/JP2023/038678
(87) International publication number: WO 2024/090515

(57) **Abstract**

The objective of the present invention is to provide a membrane electrode assembly which includes a hydrocarbon based polymer electrolyte membrane and gas diffusion electrodes. When incorporated in a fuel cell, it is low in electrical resistance and thermal resistance and serves to show a high power generation performance. It is a membrane electrode assembly that includes a hydrocarbon based polymer electrolyte membrane having a catalyst layer and a gas diffusion electrode disposed in this order on each surface of the hydrocarbon based polymer electrolyte membrane, the catalyst layer-side surface of each gas diffusion electrode having an arithmetic average roughness of 7 µm or less.

## Description

### TECHNICAL FIELD

The present invention relates to a fuel cell, particularly to a membrane electrode assembly including an electrolyte membrane and a gas diffusion electrode designed for use in a polymer electrolyte fuel cell and to a fuel cell.

### BACKGROUND ART

In a polymer electrolyte fuel cell, a hydrogen-containing fuel gas is supplied to the anode while oxygen-containing oxidizing gas is supplied to the cathode, and an electromotive force is generated by electrochemical reactions that occur on the two electrodes. Generally, it has a power generation unit in the form of a stack of a plurality of unit cells connected in series, in which each unit cell is constructed by sequentially layering a separator, a gas diffusion electrode, a catalyst layer, an electrolyte membrane, a catalyst layer, a gas diffusion electrode, and a separator. Here, of the different parts that constitute a unit cell, the five layer part that consists of two gas diffusion electrodes, two catalyst layers, and one electrolyte membrane is referred to as a membrane electrode assembly (MEA).

The gas diffusion electrodes are required to have high gas diffusivity for allowing the gas supplied from the separators to be diffused into the catalyst layers and a high water removability for removing the water generated from the electrochemical reactions to the separators as well as high electrical conductivity that enables the extraction of the generated electric current. To realize these features, gas diffusion electrodes that have conductive porous substrates made of conductive fibers such as carbon fibers (hereinafter, occasionally referred to simply as "substrates") with their surfaces covered with microporous layers (MPLs) are now in wide use (Patent documents 1 and 2).

When a typical fuel cell is working, the following reaction occurs on the anode.

H₂ → 2H⁺ + 2e⁻ (1)

On the other hand, the following reaction occurs on the cathode.

O₂ + 4H⁺ + 4e⁻ → 2H₂O (2)

Conventionally, Nafion (registered trademark, manufactured by DuPont), which is a fluorine based polymer electrolyte, has been widely used as material for electrolyte membranes. Although Nafion (registered trademark) exhibits high proton conductivity under low humidification conditions due to the existence of proton conductive channels that result from its cluster structure, it has drawbacks including extremely high prices attributable to manufacturing through multiple synthesis stages and a large crossover attributable to the above mentioned cluster structure that can allow hydrogen, which is supposed to be completely blocked, to pass through the membrane. In addition, under the operating conditions of fuel cells, dry-wet cycles are repeated and it causes repeated swelling and shrinkage of the electrolyte membrane, particularly when the electrolyte membrane is a polymer electrolyte membrane. When such cycles occur, they can cause wrinkling and sagging of the electrolyte membrane because its movement is restricted by the separators etc., and this leads to drawbacks including breakage of the membrane due to localized stress concentrations, and degradation in performance of the fuel cell. To tackle the issues, active studies have been conducted in recent years with the aim of developing hydrocarbon based polymer electrolyte membranes that are so low in price and good in membrane characteristics that they can replace Nafion (registered trademark) (Patent document 3).

### PRIOR ART DOCUMENTS

### PATENT DOCUMENTS

Patent document 1: Japanese Unexamined Patent Publication (Kokai) No. 2014-011163
Patent document 2: International Publication WO 2016/076132
Patent document 3: Japanese Unexamined Patent Publication (Kokai) No. 2019-061863

### SUMMARY OF INVENTION

### PROBLEMS TO BE SOLVED BY THE INVENTION

However, when hydrocarbon based polymer electrolyte membranes are applied to cells incorporated in fuel cell units, it tends to lead to a membrane electrode assembly having an increased electrical resistance and thermal resistance, accordingly resulting in an insufficient power generation performance.

### MEANS OF SOLVING THE PROBLEMS

In view of the above mentioned issues, the present invention provides a membrane electrode assembly as described below.
(1) A membrane electrode assembly including a hydrocarbon based polymer electrolyte membrane having a catalyst layer and a gas diffusion electrode disposed in this order on each surface of the hydrocarbon based polymer electrolyte membrane, the surface of each gas diffusion electrode that faces a catalyst layer having an arithmetic average roughness of 7 µm or less.
(2) A membrane electrode assembly as set forth in paragraph (1), wherein each gas diffusion electrode is configured to have a conductive porous substrate and a microporous layer disposed thereon and wherein the surface of the gas diffusion electrode that faces the neighboring catalyst layer is the microporous layer-side surface of the gas diffusion electrode.
(3) A membrane electrode assembly as set forth in either paragraph (1) or (2), wherein the electrolyte membrane has an elastic modulus of 1 to 3 GPa at 23°C and 50%RH.
(4) A membrane electrode assembly as set forth in any one of paragraphs (1) to (3), wherein the hydrocarbon based polymer electrolyte membrane contains a hydrocarbon based polymer electrolyte having a structural unit as represented by the general formula (S1) given below. 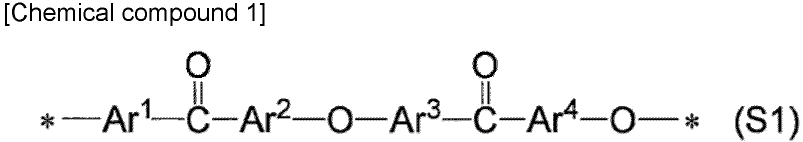 (In the general formula (S1), Ar¹ to Ar⁴ each denote an appropriately selected divalent arylene group, Ar¹ and/or Ar² each containing an ionic group, and Ar³ and Ar⁴ each containing or not containing an ionic group. Ar¹ to Ar⁴ may be substituted appropriately and may independently contain two or more arylene groups. The symbol * signifies a bonding site to a constituent unit as represented by the general formula (S1) or to other constituent units.)
(5) A membrane electrode assembly as set forth in any one of paragraphs (1) to (4), wherein the gas diffusion electrode has a thickness of 130 to 190 µm.
(6) A membrane electrode assembly as set forth in any one of paragraphs (1) to (5), wherein the gas diffusion electrode has a spring property of 3 to 7 µm.
(7) A membrane electrode assembly as set forth in any one of paragraphs (1) to (6), wherein the surface of each gas diffusion electrode that faces a catalyst layer has a fluorine to carbon ratio (F/C ratio) in the range of 0.05 to 0.5.
(8) A membrane electrode assembly as set forth in any one of paragraphs (1) to (7), wherein the surface of each gas diffusion electrode that faces a catalyst layer has an oxygen to carbon ratio (O/C ratio) of 0.05 or less.
(9) A fuel cell comprising a membrane electrode assembly as set forth in any one of paragraphs (1) to (8).

### ADVANTAGEOUS EFFECTS OF THE INVENTION

A fuel cell that incorporates a membrane electrode assembly according to the present invention exhibits a higher power generation performance compared to conventional products because of being lower in electrical resistance and thermal resistance.

### DESCRIPTION OF PREFERRED EMBODIMENTS

The membrane electrode assembly according to the present invention is configured to have a hydrocarbon based polymer electrolyte membrane, having a catalyst layer and a gas diffusion electrode disposed in this order on each surface of the hydrocarbon based polymer electrolyte membrane.

The hydrocarbon based polymer electrolyte membrane used for the present invention is actually a membrane that contains a hydrocarbon based polymer electrolyte as the main component. Here, the membrane that contains a hydrocarbon based polymer electrolyte as the main component is defined as a membrane in which the hydrocarbon based polymer electrolyte contained therein accounts for more than 50 mass%, and its content is preferably 70 mass% or more and more preferably 90 mass% or more. The hydrocarbon based polymer electrolyte contained in the hydrocarbon based polymer electrolyte membrane refers to a polymer composed mainly of hydrocarbon as the major structural unit that has a main chain, optionally with a side chain, and has an ionic group in either the main chain or the side chain, wherein the main chain and the side chain is substantially non-fluorinated. Here, a main chain that contains hydrocarbon as the major structural unit is defined as a main chain in which the total number of carbon and hydrogen atoms forming the hydrocarbon present in the main chain accounts for more than 50% of the total number of atoms present in the main chain. It should be noted that the expression "being substantially non-fluorinated" means that it does not exclude a polymer in which the main chain and the side chain are almost completely free of fluorinated portions although either of them may contain a very few fluorinated portions, and specifically, a polymer in which fluorine atoms account for less than 5 mass% of the number average molecular weight of the polymer should be considered to be in the category of substantially non-fluorinated polymers.

Specific examples of main chain structures of hydrocarbon based polymer electrolytes that can be used for the hydrocarbon based polymer electrolyte membranes to be applied to the present invention include polyethylene, polypropylene, polystyrene, polysulfone, polyethersulfone, polyphenylene oxide, polyphenylene sulfide, polyparaphenylene, polyarylene ketone, polyether ketone, polyarylene phosphine oxide, polyether phosphine oxide, polybenzoxazole, polybenzothiazole, polybenzimidazole, polyamide, polyimide, polyetherimide, and polyimide sulfone. The terms "polysulfone", "polyether", "polyketone", etc., used herein collectively refer to structures having, in their molecular chains, a sulfone bond, ether bond, or ketone bond, and they include polyether sulfone, polyether ketone, polyether ketone ketone, polyether ether ketone, and polyether ketone sulfone. The main chain of such a hydrocarbon based polymer electrolyte may contain a plurality of these structures.

Of the various polymers having different main chain structures of hydrocarbon based polymer electrolytes that can be used for hydrocarbon based polymer electrolyte membranes to be applied to the present invention, aromatic hydrocarbon based polymers having aromatic rings in the main chains are preferable, of which aromatic polyethersulfone based polymers, aromatic polyarylene ether based polymers, and aromatic polyether ketone based polymers are more preferable due to their gas barrier properties, durability, and cost-effectiveness.

The ionic groups to be applied to the present invention are preferably in the form of negatively charged atom groups and they more preferably have proton exchangeability. Preferable examples of such functional groups include sulfonic acid groups, sulfonimide groups, sulfate groups, phosphonic acid groups, phosphoric acid groups, and carboxylic acid groups. It is more preferable from the viewpoint of high proton conductivity that at least a sulfonic acid group, a sulfone imide group, or a sulfuric acid group is contained, and it is most preferable from the viewpoint of raw material cost that at least a sulfonic acid group is contained.

The hydrocarbon based polymer electrolyte present in the hydrocarbon based polymer electrolyte membrane to be used for the present invention preferably has a molecular weight of 1,000 to 5,000,000, more preferably 10,000 to 500,000, in terms of polystyrene based weight average molecular weight. When the polystyrene based weight average molecular weight is 1,000 or more, it serves to prevent the casted membrane from suffering cracking, and this leads to, for example, improvement in mechanical strength, physical durability, and solvent resistance. On the other hand, when the polystyrene based weight average molecular weight is 5,000,000 or less, it serves to maintain a high solubility and a low solution viscosity, which leads to the production of a hydrocarbon based polymer electrolyte membrane having a high processability.

It is preferable that the hydrocarbon based polymer electrolyte present in the hydrocarbon based polymer electrolyte membrane to be used for the present invention has an ion exchange capacity (IEC) of 0.1 to 5.0 meq/g to ensure a good balance between proton conductivity and water resistance. The IEC is more preferably 1.4 to 3.5 meq/g. When the IEC is more than 0.1 meq/g, it serves to produce a hydrocarbon based polymer electrolyte membrane having a desirable proton conductivity while when it is 5.0 meq/g or less, it serves to produce a hydrocarbon based polymer electrolyte membrane having a high water resistance.

It is preferable that the hydrocarbon based polymer electrolyte contained in the hydrocarbon based polymer electrolyte membrane to be used for the present invention includes an ionic group-containing structural unit (S1) as given below. 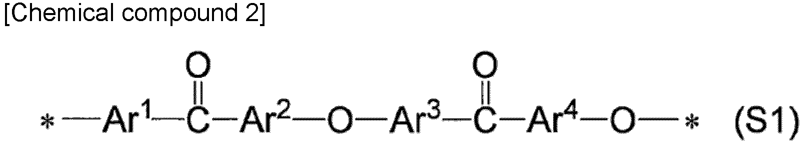 (In the general formula (S1), Ar¹ to Ar⁴ each denote an appropriately selected divalent arylene group, Ar¹ and/or Ar² each containing an ionic group, and Ar³ and Ar⁴ each containing or not containing an ionic group. Ar¹ to Ar⁴ may be substituted appropriately and may independently contain two or more arylene groups. The symbol * signifies a bonding site to a constituent unit as represented by the general formula (S1) or to other constituent units.)

Here, preferable divalent arylene groups for use as Ar¹ to Ar⁴ include, but not limited to, hydrocarbon based arylene groups such as phenylene groups, naphthylene groups, biphenylene groups, and fluorenediyl groups, and heteroarylene groups such as pyridinediyl, quinoxalinediyl, and thiophenediyl. Ar¹ to Ar⁴ are each preferably a phenylene group having a phenylene group and an ionic group, and more preferably a p-phenylene group containing a p-phenylene group and an ionic group.

It is preferable that the hydrocarbon based polymer electrolyte membrane to be used for the present invention has a glass transition temperature of 120°C to 200°C, and more preferably has a glass transition temperature of 140°C to 180°C. When it has a glass transition temperature of 120°C or more, the hydrocarbon based polymer electrolyte membrane is prevented from suffering thermal deformation during heating for forming a catalyst layer, thereby allowing the polymer electrolyte present in the catalyst layer to be heated to a temperature where it starts to soften. This allows the hydrocarbon based polymer electrolyte membrane and the catalyst layer to be adhered firmly to each other, thereby leading to a lower interfacial resistance. On the other hand, when the glass transition temperature is 200°C or less, the hydrocarbon based polymer electrolyte membrane can start to soften within a temperature range where degradation of the polymer electrolyte present in the catalyst layer does not occur, which serves to allow the hydrocarbon based polymer electrolyte membrane and the catalyst layer to be adhered firmly to each other, thereby leading to a lower interfacial resistance.

It is preferable that the hydrocarbon based polymer electrolyte membrane to be used for the present invention has an elastic modulus of 1 to 3 GPa at 23°C and 50%RH. When the elastic modulus is 1 GPa or more, it serves to lower the degree of deformation of the hydrocarbon based polymer electrolyte membrane during power generation, thereby preventing rupture of the hydrocarbon based polymer electrolyte membrane itself or the catalyst layer to ensure a high durability. On the other hand, when the elastic modulus is 3 GPa or less, it serves to allow the hydrocarbon based polymer electrolyte membrane to maintain a desirable flexibility so that the hydrocarbon based polymer electrolyte membrane can conform to the shapes of the surface irregularities of the gas diffusion electrodes. This acts to reduce the interfacial resistance between the catalyst layer and the gas diffusion electrode disposed on each surface of the hydrocarbon based polymer electrolyte membrane to ensure that the fuel cell incorporating them will have a high power generation performance. The elastic modulus of a hydrocarbon based polymer electrolyte membrane can be measured using an appropriate tool such as tensile testing machine, dynamic viscoelasticity measuring device, and nanoindenter. Here, in order to ensure enhanced strength, the hydrocarbon based polymer electrolyte membrane may be configured to have a three layer structure consisting of a reinforcing layer including a highly rigid porous substrate (a mixed layer of a porous substrate and a polymer electrolyte) interposed between two layers of polymer electrolyte. In this case, the elastic modulus of the hydrocarbon based polymer electrolyte membrane is defined as the elastic modulus of the hydrocarbon based polymer electrolyte layers that are disposed on both sides of the reinforcing layer. To measure the elastic modulus of a hydrocarbon based polymer electrolyte membrane having such a three layer structure, the use of a nanoindenter for its measurement is preferable in order to eliminate the influence of the reinforcing layer.

The thickness of the hydrocarbon based polymer electrolyte membrane is preferably 3 µm or more to ensure sufficient mechanical strength and physical durability required for practical use, whereas it is preferably 30 µm or less in order to maintain a low membrane resistance, which ensures a high power generation performance, and allow the hydrocarbon based polymer electrolyte membrane to conform closely to the surfaces of the gas diffusion electrodes. The thickness of the membrane is more preferably in the range of 5 to 10 µm. The thickness of the hydrocarbon based polymer electrolyte membrane can be controlled by changing the concentration or the coating thickness of the solution of the hydrocarbon based polymer electrolyte during the membrane formation step.

The catalyst layer in the membrane electrode assembly according to the present invention is a layer that contains a catalyst material and a polymer electrolyte. Each catalyst layer in a typical fuel cell is a layer that contains catalyst-supporting carbon particles, which carry a catalyst material on the surfaces thereof, and a fluorine based polymer electrolyte, but it is not limited to such structures as long as the layer can stably retain the catalyst material and ensure sufficient electron conduction and proton conduction in the catalyst layer. For example, the layer may contain a catalyst material supported on particles of an inorganic oxide such as silica and zirconia instead of carbon particles, and the polymer electrolyte present in the catalyst layer may be a hydrocarbon based polymer electrolyte etc. instead of a fluorine based polymer electrolyte.

Here, a fluorine based polymer electrolyte is a polymer that has a main chain containing perfluorocarbon as the primary constituent unit and has ionic groups attached to the main chain or a side chain. Here, the definition of the primary constituent unit is the same as described earlier for hydrocarbons. Examples of such a fluorine based polymer electrolyte include perfluorocarbon polymers that have sulfonic acid groups (which may also include ether based oxygen atoms). In particular, it is preferably a copolymer that contains a tetrafluoroethylene based repeating unit and a perfluorocarbon repeating unit having a sulfonic acid group. Examples of commercial products of such copolymers include Nafion (registered trademark, manufactured by DuPont) and Aquivion (registered trademark, manufactured by Solvay).

Preferable catalyst materials to be used for the present invention include platinum, platinum group elements such as palladium, ruthenium, iridium, rhodium, and osmium, metals such as iron, lead, copper, chromium, cobalt, nickel, manganese, vanadium, molybdenum, gallium, and aluminum, as well as alloys, oxides, and complex oxides thereof.

There are no specific limitations on the type of carbon particles to be used as catalyst-supporting carbon particles for the present invention as long as they are in the form of fine particles that have electrical conductivity and resistant to corrosion or degradation during reactions with the catalyst. Good examples include carbon black, graphite, activated carbon, carbon fibers, carbon nanotubes, and fullerene particles.

If the catalyst-supporting carbon particles used for the present invention are too small in particle size, it may cause hindrance in the formation of electronic conduction paths. On the other hand, if they are too large, it may lead to a reduction in the gas diffusivity in the catalyst layers and a decrease in catalyst utilization efficiency. In view of this, the particle size is preferably 10 to 1,000 nm and more preferably 10 to 100 nm.

The ratio by mass of the content of the polymer electrolyte to the content of the catalyst-supporting carbon particles in the catalyst layers used for the present invention is preferably 0.2 to 2.5 and more preferably 0.5 to 2.0. When the ratio by mass is 0.2 or more, it serves to enhance the strength of the catalyst layer and prevent the occurrence of cracks. On the other hand, when the ratio by mass is 2.5 or less, it serves to ensure a desirable gas diffusivity and improve the power generation performance.

The amount of catalyst material per unit area of the catalyst layers is preferably 0.01 mg/cm² or more and more preferably 0.05 mg/cm² or more. When it is 0.01 mg/cm² or more, it allows the material to have a sufficient catalytic activity to work as a catalyst, thereby ensuring a high power generation performance.

Catalyst layers having thicknesses of 0.5 to 2,000 µm can work suitably. To ensure a power generation performance and durability required for practical use, it is more preferable for a catalyst layer to have a thickness of 1 to 30 µm.

Each gas diffusion electrode present in the membrane electrode assembly according to the present invention is preferably configured to have a conductive porous substrate having a microporous layer disposed thereon. The conductive porous substrate mentioned above is described below.

For the membrane electrode assembly according to the present invention, good examples of conductive porous substrates to be used include porous substrates containing carbon fibers such as carbon fiber fabrics, carbon fiber paper-making substrates, carbon fiber nonwoven fabrics, carbon felts, carbon papers, and carbon cloths. Here, carbon paper refers to a sheet that is formed by binding carbon fiber paper-making substrates with a carbonized resin. In particular, it is preferable to use carbon felts, carbon papers, or carbon cloths because they are high in corrosion resistance, and the use of carbon papers is more preferable because they are high in "spring property", which represents the degree of absorption of dimensional changes in the thickness direction of the hydrocarbon based polymer electrolyte membrane.

For the present invention, good examples of carbon fibers that are used in conductive porous substrates include polyacrylonitrile (PAN) based, pitch based, and rayon based carbon fibers. In particular, the use of PAN based carbon fibers and pitch based carbon fibers is preferable because they are high in mechanical strength. It is also a good method to use a mixture thereof with natural fibers or synthetic fibers such as rayon fibers, acrylic fibers, and cellulose fibers.

It is preferable that the carbon fibers that are present in a conductive porous substrate to be used for the present invention have an average filament diameter of 3 to 20 µm. When they have an average diameter of 3 µm or more, the conductive porous substrate has a large pore diameter so that the conductive porous substrate exhibits a high water drainage performance and works effectively to suppress flooding. On the other hand, when the average diameter is 20 µm or less, the conductive porous substrate is low in water vapor diffusivity and works effectively to suppress dry-out. The filaments present in the carbon fibers more preferably have an average diameter of 5 to 10 µm because it serves to enhance the above features.

It is preferable that the carbon fibers that are present in a conductive porous substrate to be used for the present invention contain filaments having an average length of 3 to 20 mm. When their average length is 3 mm or more, the conductive porous substrates are high in mechanical strength, electrical conductivity, and thermal conductivity. On the other hand, when their average length is 20 mm or less, the carbon fibers are high in dispersibility during a paper-making process, leading to homogeneous conductive porous substrates. The filaments present in the carbon fibers more preferably have an average length of 5 to 15 mm because it serves to enhance the above features.

It is preferable that the conductive porous substrates to be used for the present invention have a mass per unit area (areal weight) of 20 to 50 g/m². When the areal weight is 20 g/m² or more, it allows the conductive porous substrates to have a higher mechanical strength and electrical conductivity. On the other hand, when they have an areal weight of 50 g/m² or less, it allows the conductive porous substrates to have a desirable gas diffusivity in the normal direction to the surface (hereinafter, the normal direction to the surface refers to the thickness direction), making it possible to produce a fuel cell having a higher power generation performance. The conductive porous substrates more preferably have an areal weight of 30 to 40 g/m² because it serves to enhance the above features.

The areal weight of the conductive porous substrates to be used for the present invention can be controlled by changing the amounts of the carbon fibers, carbonized resins, etc. that are included as constituent materials of the conductive porous substrates.

The conductive porous substrates to be used for the present invention preferably have a hydrophobic resin attached to their interior by hydrophobic treatment. Preferable hydrophobic resins include fluorinated resins having fluoroalkyl chains. Examples of such fluorinated resins include PTFE (polytetrafluoroethylene), FEP (tetrafluoroethylene-hexafluoropropylene copolymer), PFA (tetrafluoroethylene-perfluoroalkyl vinyl ether copolymer), ETFE (tetrafluoroethylene-ethylene copolymer), PVDF (polyvinylidene fluoride), and PVF (polyvinyl fluoride), of which PTFE and FEP are preferable because they are high in hydrophobicity.

When a hydrophobic resin is attached to the conductive porous substrates to be used for the present invention, the amount of the hydrophobic resin is not particularly limited, but it preferably accounts for 0.1 to 20 mass% relative to the total mass, which accounts for 100 mass%, of the conductive porous substrates. When it is in this range, a sufficient hydrophobicity is achieved while preventing the hydrophobic resin from clogging pores that work as gas diffusion paths or from suffering an increase in electrical resistance.

In general, the gas diffusion electrodes in polymer electrolyte fuel cells are required to have a high gas diffusivity for allowing the gas supplied from a separator to be diffused into a catalyst layer and a high water removability for removing the water generated from electrochemical reactions to a separator. To meet these requirements, it is preferable that the conductive porous substrates used for the present invention have a peak pore diameter in the range of 10 to 100 µm. The pore diameter and its distribution can be determined from pore diameter distribution measurement that is performed with a mercury porosimeter. The pore diameter of a conductive porous substrate may be determined by examining the conductive porous substrate alone or by examining the gas diffusion electrode after forming a microporous layer. When examining a gas diffusion electrode, a normal directional cross section (a cross section parallel to the normal direction) of the gas diffusion electrode is observed using a scanning electron microscope (SEM) to determine the structure of each layer and the diameters of pores in a porous part of the conductive porous substrate are roughly estimated from the SEM image obtained. Then, the pore diameter of the conductive porous substrate is determined by comparing the rough estimate obtained from the SEM image with the plural peaks of pore diameters measured by using a mercury porosimeter.

For the membrane electrode assembly according to the present invention, it is preferable that each conductive porous substrate has a porosity of 80% to 95%. When the porosity is 80% or more, it serves to ensure a high gas diffusivity, thereby leading to a high power generation performance. On the other hand, when the porosity is 95% or less, it serves to allow the conductive porous substrate to maintain a high mechanical strength and a high electrical conductivity. When the conductive porous substrate has a porosity of 85% to 90%, it is more preferable because it serves to enhance the above features. The porosity of the conductive porous substrate can be determined by using a densimeter.

For the membrane electrode assembly according to the present invention, it is preferable that each conductive porous substrate has a thickness of 90 to 180 µm. Here, the thickness of the conductive porous substrate is defined as the thickness that is measured while applying a pressure of 0.15 MPa to both surfaces. When it has a thickness of 90 µm or more, it serves to maintain a required mechanical strength, which facilitates its handling during the production process. In addition, it serves to enhance the spring property to allow the gas diffusion electrodes to absorb dimensional changes that are caused by expansion and shrinkage of the hydrocarbon based polymer electrolyte membrane during fuel cell operation and also enhance the gas diffusivity in the in-plane direction, thereby leading to a higher power generation performance. On the other hand, when the thickness of the conductive porous substrate is 180 µm or less, it serves to improve the gas diffusivity in the normal direction to the surface and shorten the conductive path in the normal direction to enhance the conductivity, thereby making it possible to produce a fuel cell having a high power generation performance. When each conductive porous substrate has a thickness of 110 to 150 µm, it is more preferable because it serves to enhance the above features.

Next, when each gas diffusion electrode used for the present invention is configured to have a conductive porous substrate and a microporous layer disposed thereon, features of the microporous layer should be as described below. Each gas diffusion electrode present in the membrane electrode assembly according to the present invention is preferably configured to have a microporous layer present on either surface of the conductive porous substrate. The roles to be played by the microporous layer include water management including maintaining the moisture in the electrolyte membrane and removing the generated water, reduction of the interfacial electrical resistance between the catalyst layer and the gas diffusion electrode, and prevention of damage to the electrolyte membrane from being caused by carbon fibers that protrude from the conductive porous substrate. It is preferable that the microporous layer contains both carbon microparticles and a hydrophobic resin.

Good materials to be used for the carbon microparticles present in the microporous layer used for the present invention include carbon black, carbon nanofibers, carbon nanotubes, and graphene. Of these, the use of carbon black is preferable because of its low price.

The carbon microparticles present in the microporous layer used for the present invention preferably have a specific surface area of 20 to 40 m²/g. When the carbon microparticles have a specific surface area of 20 m²/g or more, it serves to enhance the dispersibility of carbon microparticles in the coating ink used for forming a microporous layer, which will be described later, thereby allowing a uniform microporous layer to be created. This also serves to improve the moisture retention and water removability of the microporous layer, thereby leading to an enhanced power generation performance. When the carbon microparticles have a specific surface area of 40 m^{2/}g or less, it serves to suppress the oxidative corrosion reaction of carbon, thereby making it possible to produce a fuel cell having a higher durability.

The contents of the hydrophobic resin and carbon microparticles per unit volume of the microporous layer used for the present invention can be determined by mass spectrometry. First, while the microporous layer is heated to 1,000°C in a He atmosphere to thermally decompose and remove the resin components, the gas components released during this step are analyzed to determine the content of the hydrophobic resin in the microporous layer. Then, the mass of the residues left after the thermal decomposition treatment is measured and used to determine the content of the carbon microparticles. By dividing these measurements by the volume of the microporous layer under measurement, it is possible to determine their contents per unit volume.

Furthermore, if the carbon microparticles present in the microporous layer used for the present invention have a fibrous form such as carbon nanofibers and carbon nanotubes, it is preferable because they form conductive paths in the microporous layer, thereby realizing the effect of reducing the electrical resistance of the microporous layer.

The hydrophobic resin included in the microporous layer used for the present invention is preferably a fluorinated resin having a fluoroalkyl chain because it is high in chemical stability and a high hydrophobicity. As in the case of the fluorinated resins that are suitable for hydrophobic treatment of conductive porous substrates, good examples include PTFE (polytetrafluoroethylene), FEP (tetrafluoroethylene-hexafluoropropylene copolymer), PFA (tetrafluoroethylene-perfluoroalkyl vinyl ether copolymer), ETFE (tetrafluoroethylene-ethylene copolymer), PVDF (polyvinylidene fluoride), and PVF (polyvinyl fluoride).

Since fluorinated resins are generally insoluble in water, organic solvents, etc., it is preferable to use a dispersion liquid of a hydrophobic resin processed into microparticles when preparing a coating ink to be used for producing microporous layers. Examples of such a dispersion liquid of microparticles of a hydrophobic resin include Polyflon (registered trademark) D-210C and ND-110 (both manufactured by Daikin Industries, Ltd.) and 120-JRB and 31-JR (both manufactured by Chemours-Mitsui Fluoroproducts Co., Ltd.).

For the present invention, the amount of the hydrophobic resin to be added when forming such a microporous layer as described above is preferably 10 to 100 parts by mass accounted for by the hydrophobic resin relative to 100 parts by mass of carbon microparticles. When it is in this range, a sufficient hydrophobicity is achieved while preventing the hydrophobic resin from clogging pores that work as gas diffusion paths or from suffering an increase in electrical resistance. Furthermore, the interfacial resistance between the catalyst layer and the gas diffusion layer can be reduced.

For the present invention, it is also possible to adopt a silicone resin having a siloxane bond as the hydrophobic resin used for preparing such a microporous layer as described above.

Furthermore, when forming such a microporous layer as described above for the present invention, it is also possible to include a thermosetting resin in addition to the hydrophobic resin. Useful thermosetting resins include phenol resins, epoxy resins, acrylate resins, and furan resins.

In addition, the microporous layers used for the present invention may also contain fine particles of iridium oxide, ruthenium oxide, titanium oxide, etc., that act to promote electrolysis of water in a reverse potential state that occurs in the case of hydrogen deficiency. Furthermore, fine particles of cerium oxide, manganese oxide, etc., may also be included in order to deactivate hydroxide radicals that can be generated on the anode electrode.

In the case where the membrane electrode assembly according to the present invention is configured to contain a gas diffusion electrode having a conductive porous substrate and a microporous layer disposed thereon, it is preferable that the microporous layer has an areal weight of 10 to 35 g/m². When the microporous layer has an areal weight of 10 g/m² or more, it serves to cover carbon fibers that protrude from the surface of the conductive porous substrate, thereby preventing the electrolyte membrane from being damaged by such carbon fibers. Furthermore, it also acts to reduce the contact resistance between the gas diffusion electrode and the catalyst layer and prevent the electrolyte membrane from drying out. In addition, when the microporous layer has an areal weight of 35 g/m² or less, it serves to enhance drainage. If the microporous layer has an areal weight of 15 to 25 g/m², it is more preferable because it serves to enhance the above features.

For the membrane electrode assembly according to the present invention, the surface of a gas diffusion electrode that faces a catalyst layer has an arithmetic average roughness of 7 µm or less. In addition, it is preferable that the above mentioned surface of the gas diffusion electrode that faces a catalyst layer is the surface of the gas diffusion electrode that is covered by a microporous layer. The hydrocarbon based polymer electrolyte membrane used for the membrane electrode assembly according to the present invention has a higher elastic modulus compared to conventional fluorine based polymer electrolyte membranes, making it less likely for the catalyst layer disposed on the surface of the hydrocarbon based polymer electrolyte membrane to conform closely to irregularities present on the surface of the gas diffusion electrode that has a microporous layer. This is likely to cause non-contact parts, which can act to increase the interfacial resistance between the catalyst layer and the gas diffusion electrode. To solve this problem, it was found that such an increase in interfacial resistance can be prevented to realize a high power generation performance in the case where the arithmetic average roughness of the surface of the gas diffusion electrode that has a microporous layer is maintained at 7 µm or less. On the other hand, if the arithmetic average roughness of the surface of the gas diffusion electrode that has a microporous layer is maintained at 4 µm or more, it is preferable because it allows recesses present on the surface to capture generated water as droplets so that these water droplets act as a water source to prevent the catalyst layer from drying, thereby leading to an improved power generation performance.

In the case where the gas diffusion electrode is configured to have a conductive porous substrate and a microporous layer disposed thereon, the existence of large irregularities on the surface of the conductive porous substrate itself tends to lead to large irregularities also on the surface of the microporous layer. Therefore, the arithmetic average roughness of the surface of the conductive porous substrate that has the microporous layer should also be smaller than a specified value, preferably 30 µm or less.

The arithmetic average roughness (Ra) of the surfaces of the gas diffusion electrodes and the conductive porous substrates to be used for the membrane electrode assembly according to the present invention can be measured using a laser microscope. For example, the surface roughness profile over a length of 5 mm in an appropriately selected area on a surface is observed under a VK-X3000 laser microscope (manufactured by Keyence Corporation), and Ra is calculated as its average.

For the membrane electrode assembly according to the present invention, it is preferable that each gas diffusion electrode has a thickness of 130 to 190 µm. Here, the thickness of a gas diffusion electrode is defined as the thickness that is measured while applying a pressure of 0.15 MPa to both surfaces thereof. When the thickness of the gas diffusion electrode is 130 µm or more, it serves to maintain a required mechanical strength, which facilitates its handling during the production process. On the other hand, when the thickness of the gas diffusion electrode is 190 µm or less, it serves to improve the gas diffusivity and reduce the electrical resistance, thereby leading to a fuel cell having a higher power generation performance. The thickness of the gas diffusion electrode can be adjusted by appropriately adjusting the thicknesses of the conductive porous substrate and the microporous layer.

For the membrane electrode assembly according to the present invention, it is preferable that the gas diffusion electrodes to be used have a spring property of 3 to 7 µm. Spring property refers to the change in thickness of a gas diffusion electrode that occurs when pressure is applied to both surfaces thereof, and it is defined herein as the difference between the thickness of a gas diffusion electrode with a pressure of 1 MPa applied to both surfaces and its thickness with a pressure of 2 MPa applied to both surfaces. When the gas diffusion electrodes have a spring property of 3 µm or more, it serves to ensure uniform pressure distribution across the plane of a fuel cell when it is assembled, thereby reducing the variability in power generation. In addition, the surface irregularities of the gas diffusion electrode can be reduced easily under pressure, and accordingly, the interfacial resistance between the catalyst layer and the gas diffusion electrode disposed on each surface of the hydrocarbon based polymer electrolyte membrane will decrease. On the other hand, when the gas diffusion electrodes have a spring property of 7 µm or less, it serves to prevent pores present in the gas diffusion electrodes from being crushed by the pressure that is applied when assembling the fuel cell, thereby serving to maintain a required gas diffusivity and drainage rate.

For the membrane electrode assembly according to the present invention, it is preferable that the surface of each gas diffusion electrode that faces a catalyst layer preferably has a fluorine to carbon atomic ratio (hereafter referred to F/C ratio) of 0.06 to 0.4. When the F/C ratio is 0.06 or more, it serves to allow the gas diffusion electrode to have a high drainage rate. On the other hand, when the F/C ratio is 0.4 or less, it serves to allow the gas diffusion electrode to have good moisture retention property. Furthermore, the interfacial resistance between the catalyst layer and the gas diffusion layer can be reduced.

For the membrane electrode assembly according to the present invention, it is preferable that the surface of each gas diffusion electrode that faces a catalyst layer preferably has an oxygen to carbon atomic ratio (hereafter referred to O/C ratio) of 0.05 or less. When the O/C ratio is 0.05 or less, it serves to improve the moisture retention property and reduce the interfacial resistance, thereby leading to a higher power generation performance.

To determine the F/C ratio and the O/C ratio, the surface of the gas diffusion electrode that faces the catalyst layer is subjected to elemental analysis that is performed by using an X-ray photoelectron spectroscope (XPS) to determine the element concentrations of fluorine (F), oxygen (O), and carbon (C), and the F/C and O/C ratios are calculated based on the results.

Next, a typical production method for the membrane electrode assembly according to the present invention will be described below.

First, a solution of a hydrocarbon based polymer electrolyte is prepared by dissolving the hydrocarbon based polymer electrolyte in a solvent. This solution is applied to a substrate, such as a glass substrate or PET substrate, and then a hydrocarbon based polymer electrolyte membrane can be formed on the substrate by removing the solvent. The hydrocarbon based polymer electrolyte membrane is peeled off from the substrate to provide an isolated single membrane of the hydrocarbon based polymer electrolyte.

Good techniques for applying a hydrocarbon based polymer electrolyte solution include bar coating, applicator coating, knife coating, direct roll coating, Meyer bar coating, gravure coating, reverse coating, air knife coating, spray coating, brush coating, dip coating, die coating, vacuum die coating, curtain coating, flow coating, spin coating, screen printing, and ink jet coating.

The hydrocarbon based polymer electrolyte solution preferably has a viscosity of 100 to 50,000 mPa·s, more preferably 300 to 10,000 mPa·s. When the viscosity is in the above preferable range, it serves to facilitate the production of a hydrocarbon based polymer electrolyte membrane having a uniform membrane thickness and the production of a hydrocarbon based polymer electrolyte membrane having a high surface smoothness.

There are no specific limitations on the solvent to be used to prepare a hydrocarbon based polymer electrolyte membrane as long as it can dissolve a hydrocarbon based polymer electrolyte material and allow it to be removed thereafter, and good examples thereof include non-protonic polar solvents such as N,N-dimethylacetamide, N,N-dimethylformamide, N-methyl-2-pyrrolidone, and dimethylsulfoxide; ester based solvents such as γ-butylolactone and butylacetate; carbonate based solvents such as ethylene carbonate and propylene carbonate; alkylene glycol monoalkyl ethers such as ethylene glycol monomethyl ether, ethylene glycol monoethyl ether, propylene glycol monomethyl ether, and propylene glycol monoethyl ether; alcohol based solvents such as isopropanol; water; and mixtures thereof. Of these, non-protonic polar solvents are preferable because they are the highest in solubility.

A preferable method to produce a tough film is to prepare a solution of a hydrocarbon based polymer electrolyte having a required solid concentration and subject it to filtration under atmospheric pressure or increased pressure to remove foreign objects existing in the hydrocarbon based polymer electrolyte solution. It is preferable for the filter used for the filtration to have a pore diameter of 1 µm or less.

After applying the hydrocarbon based polymer electrolyte solution to a substrate, a membrane of the hydrocarbon based polymer electrolyte can be obtained by carrying out a drying step. In the drying step, the coating film of the hydrocarbon based polymer electrolyte solution is heated to evaporate the solvent. There are no specific limitations on the heating method as long as it serves to evaporate the solvent, and examples of useful ones include the use of a heating tool such as oven and heater and other tools that use infrared beam, hot air, etc., to control the temperature around the coating film. Good examples also include the transfer of heat to the coating film through the substrate. The heating temperature range to be used is preferably close to the boiling point of the solvent and not higher than the glass transition temperature of the hydrocarbon based polymer electrolyte membrane. Furthermore, it is also possible to remove the solvent by reducing the pressure or introducing an air flow instead of heating.

After carrying out the drying step, additional heat treatment may be performed to enhance the mechanical characteristics of the membrane. The temperature of this heat treatment is preferably in the range of 80°C to 350°C, more preferably 100°C to 200°C, and still more preferably 120°C to 150°C. The heat treatment time is preferably 10 seconds to 12 hours, more preferably 30 seconds to 6 hours, and still more preferably 1 minute to 1 hour. If the heat treatment temperature is excessively low, a sufficient mechanical strength and physical durability may not be achieved in some cases. On the other hand, if the heat treatment temperature is excessively high, chemical decomposition of the membrane material may proceed in some cases. If the heat treatment time is less than 10 seconds, it will lead to an insufficient effect of the heat treatment. On the other hand, if the heat treatment time exceeds 12 hours, the membrane material tends to suffer deterioration easily. It is preferable that the heat treatment is performed in an inactive gas atmosphere such as nitrogen.

The hydrocarbon based polymer electrolyte that is present in the solution may be in the form of a salt in which the ionic group is combined with a cation of an alkali metal or alkaline earth metal such as Li, Na, K, Ca, Sr, and Ba. In such cases, after forming a film on a substrate and carrying out the drying step, it is also preferable to carry out a step in which the alkali metal or alkaline earth metal cations are replaced with protons. It is more preferable that the latter step is carried out by bringing the resulting film into contact with an acidic aqueous solution. It is still more preferable that this contacting step is carried out by immersing the resulting film in an acidic aqueous solution. In the more preferable step described above, protons in the acidic aqueous solution are replaced with cations that are ionically bonded with ionic groups, and at the same time, residual components such as water soluble impurities, remaining monomers, solvent, and residual salts are removed. There are no specific limitations on the acidic aqueous solution to be used, but preferable solutions include sulfuric acid, hydrochloric acid, nitric acid, acetic acid, trifluoromethane sulfonic acid, methane sulfonic acid, phosphoric acid, and citric acid. The concentration etc. of the acidic aqueous solution should also be set appropriately, and it is preferable to adopt an aqueous sulfuric acid solution having a concentration of 3 mass% or more and 30 mass% or less.

Furthermore, the hydrocarbon based polymer electrolyte membrane produced in the step described above may contain additives that are generally used for ordinary polymer compounds, including crystal nucleating agents, plasticizers, stabilizers, antioxidants, and mold release agents to an extent that does not impair the objectives of the present invention.

In addition, the hydrocarbon based polymer electrolyte membrane produced in the step described above may also contain various polymers, elastomers, fillers, fine particles, and other various additives with the aim of improving the mechanical strength, heat stability, and processability, to an extent that will not have adverse influence on the above characteristics.

Next, a typical method for forming catalyst layers on both sides of the resulting hydrocarbon based polymer electrolyte membrane will be described in detail. It should be noted that the process described below is designed to form catalyst layers first on both sides of the hydrocarbon based polymer electrolyte membrane and then attach gas diffusion electrodes to both sides thereof, but alternatively, it is also possible to first prepare two gas diffusion electrodes each having a catalyst layer on either surface thereof, and then attach the surface of each gas diffusion electrode that has a catalyst layer to each surface of the hydrocarbon based polymer electrolyte membrane. Here, when using a gas diffusion electrode having a microporous layer on a surface thereof, it is preferable to form a catalyst layer on the surface of the microporous layer.

The method to be used to form catalyst layers is not particularly limited, but preferable methods include a process in which a coating solution for catalyst layer formation is applied first, followed by drying it and a process in which a catalyst layer decal that consists of a substrate and a catalyst layer formed thereon is prepared first, followed by transferring the catalyst layer decal onto a polymer electrolyte membrane and then drying it. These are preferable because the processes can be simplified and required process costs can be decreased. Here, as described above, when a catalyst layer is initially formed on a gas diffusion electrode, it is preferable to form a catalyst layer decal on either surface of the gas diffusion electrode.

In the case of a method that involves coating with a solution for catalyst layer formation, there are no specific limitations on the coating method as long as coating can be performed in an intended shape, and the method described above for the coating step for applying a hydrocarbon based polymer electrolyte solution can be adopted.

There are no specific limitations on the solvent to be contained in the coating solution for catalyst layer formation as long as the solvent can disperse the polymer electrolyte and the catalyst-supporting carbon particles, but it is preferable that the solvent can be removed easily by thermal vaporization. For example, it is preferable to use a solvent having a boiling point of 140°C or less. Specific examples thereof include water; alcohols such as propanol and butanol; ketones such as methyl ethyl ketone, hexanone, cyclohexanone, and diisobutyl ketone; ethers such as diethylene glycol dimethyl ether, methoxytoluene, and dibutyl ether; esters such as isopropyl acetate, butyl acetate, ethyl lactate, and butyl lactate; and others such as dimethylformamide, dimethylacetamide, N-methyl-2-pyrrolidone, ethylene glycol, diethylene glycol, diacetone alcohol, and 1-methoxy-2-propanol, which may be used singly or as a mixture of two or more thereof.

In the case of using the method that involves transfer of a catalyst layer decal, a coating solution for catalyst layer formation is first applied to a decal substrate and optionally subjected to a drying step, to form a catalyst layer decal. Then, a hydrocarbon based polymer electrolyte membrane is sandwiched between a catalyst layer decal disposed on the cathode electrode side and a catalyst layer decal disposed on the anode electrode side, and they are hot-pressed while holding them in such a manner that the decal surfaces carrying catalyst layers come in contact with the hydrocarbon based polymer electrolyte membrane, thereby providing a hydrocarbon based polymer electrolyte membrane having catalyst layers attached thereon. The hot-pressing temperature and pressure to be used may be set appropriately in consideration of the thickness of the hydrocarbon based polymer electrolyte membrane, moisture content, and types of the catalyst layers and decal substrates, but from the viewpoint of industrial productivity and control of the thermal degradation of the hydrocarbon based polymer electrolyte membrane, it is preferable to perform it in the range of 40°C to 250°C and it is more preferable to perform it at a temperature higher than the glass transition temperature of the polymer electrolyte present in the catalyst layers and not higher than 200°C. From the viewpoint of the protection of the hydrocarbon based polymer electrolyte membrane and electrodes, the application of pressure in the hot-pressing step should be carried out at a pressure that is as mall as possible. In the case of using a plate press machine, it is preferable to use a pressure of 10 MPa or less.

The decal substrate used above may be in the form of a resin film or substrate similar to those used above for forming a hydrocarbon based polymer electrolyte membrane. There are other useful substrates including films of fluorinated resins such as PTFE, polyhexafluoropropylene, ETFE, ethylene-hexafluoropropylene copolymer, FEP, PFA, and PVDF. The use of a fluorinated resin film is preferable from the viewpoint of having good chemical stability and release properties as well as high heat resistance and solvent resistance.

For drying the catalyst layers, similar methods to those described above for drying the hydrocarbon based polymer electrolyte solution can be used.

Next, a typical method for attaching gas diffusion electrodes on both sides of a hydrocarbon based polymer electrolyte membrane that carries catalyst layers will be described in detail. First, a production method for a gas diffusion electrode will be described below.

Bundles of carbon fibers cut to a certain length are loosened in water and dispersed uniformly to prepare a carbon fiber dispersion liquid, and it is subjected to a papermaking process and then dried to provide a paper-like sheet of carbon fibers. In this step, the carbon fiber dispersion liquid may contain a surfactant, thickener, defoamer, etc., and may also contain a water soluble resin that can serve to maintain the shape of the paper-like carbon fiber sheet. Examples of such a water soluble resin include polyvinyl alcohol and polyvinyl acetate.

When a long-size paper-like sheet is to be produced continuously, an increase in the speed of the papermaking wire can serve to align carbon fibers in the length direction, thereby enhancing the elastic modulus in the carbon fiber alignment direction. If the gas diffusion electrodes are disposed in such a manner that the carbon fiber alignment direction is perpendicular to the separator flow channels during the fuel cell production process, it acts to prevent the gas diffusion electrodes from being pushed into the grooves of the channels, thereby leading to a higher drainage rate.

The paper-like carbon fiber sheet prepared above may be used as a conductive porous substrate. However, in order to ensure improved mechanical strength and reduced electrical resistance, it is preferable to bind the intersections of carbon fibers with a carbonized resin.

For example, a usable method for this is to impregnate the paper-like carbon fiber sheet with a resin composition solution and then subject it to heat treatment so that the resin component in the resin composition is carbonized.

Examples of resins useful to prepare such a resin composition solution include thermosetting resins such as phenol resins, epoxy resins, melamine resins, and furan resins. The resin composition solution may contain carbon powder, a surfactant, etc., in addition to the resin component and solvent. Examples of carbon powder include carbon black, graphite, carbon nanotubes, and carbon nanofibers.

Good methods to use for the impregnation with a resin composition solution include dipping, spraying, blade coating, die coating, and transferring. The impregnation operation may be controlled appropriately so that a gradient distribution in volume of the resin composition is developed in the thickness direction of the substrate.

Then, the paper-like sheet impregnated with a resin composition solution is dried in air at a temperature of 80°C to 150°C. Subsequently, it is heated in air at 200°C to 300°C to cure the thermosetting resin while decomposing and removing the surfactant etc. During this step, paper-like sheet may be pressed by sandwiching it between flat plates and applying a pressure to both surfaces in order to ensure a high flatness and adjust the thickness.

To enhance the conductivity and increase the long-term durability of the conductive porous substrate, furthermore, it is preferable to carbonize the cured resin composition at a temperature of 1,000°C to 2,400°C in an inert gas atmosphere such as nitrogen. Here, if pre-carbonization treatment is performed at 300°C to 1,000°C in an inert gas atmosphere before the above carbonization step so that impurities are decomposed and removed to allow it to have a crystalline structure closer to graphite, it is preferable because it serves to ensure an increased crystallinity in the carbonization treatment step and improvements in the above characteristics.

A conductive porous substrate thus obtained can exhibit a sufficient mechanical strength and conductivity to work as a conductive porous substrate in a gas diffusion electrode in a fuel cell.

In addition, hydrophobic treatment may be carried out in order to improve the water drainage rate of the conductive porous substrate. Good methods for such hydrophobic treatment of the conductive porous substrate include immersion of the conductive porous substrate in a dispersion liquid of a hydrophobic resin and coating of the conductive porous substrate with a hydrophobic resin by die coating, spray coating, etc. Here, a dry processing such as fluorinated resin sputtering can also be applied. After the hydrophobic treatment step, other steps may be carried out as required including a drying step and a heating step designed to allow the hydrophobic resin to wetly spread through the conductive porous substrate. In this way, a conductive porous substrate that is usable for the membrane electrode assembly according to the present invention can be produced.

Described next will be a method for forming a microporous layer on a conductive porous substrate.

To form a microporous layer, for example, carbon microparticles and a hydrophobic resin are dispersed in a solvent such as water to prepare a coating ink for microporous layer formation and it is applied over a conductive porous substrate, followed by heat treatment.

When preparing a coating ink for microporous layer formation, it is preferable to add a dispersant, thickener, etc., to the ink because they can serve to improve the dispersion stability of the carbon microparticles and hydrophobic resin. Such a dispersant is preferably a nonionic surfactant because it is low in metal content, and examples thereof include Triton (registered trademark) X-100 (manufactured by Nacalai Tesque, Inc.), which is based on polyoxyethylene octylphenyl ether. In addition, the addition of a thickener is effective in order to allow the coating ink to maintain a high viscosity. Examples of such a thickener include methyl cellulose based, polyethylene glycol based, and polyvinyl alcohol based thickeners.

Such a dispersant and thickener may be one material that can perform both functions or separate materials that perform different suitable functions. However, when selecting a thickener and a dispersant separately, it is preferable to adopt a thickener that does not deteriorate the dispersion capability of the carbon microparticles or the dispersion capability of the hydrophobic resin.

Furthermore, if necessary, fine particles of such materials as iridium oxide, ruthenium oxide, and titanium oxide that work to promote the electrolysis of water, or fine particles of such materials as cerium oxide and manganese oxide that work for radical deactivation may be added.

A mixture of components as listed above is kneaded using a device such as homogenizer, planetary mixer, and ultrasonic disperser to prepare a coating ink for microporous layer formation.

The coating of a conductive porous substrate with a coating ink for microporous layer formation can be performed using any of various commercially available coating devices. Good methods for the coating include screen printing, rotary screen printing, intaglio printing, gravure printing, spray coating, die coating, bar coating, blade coating, and roll knife coating.

After applying a coating ink for microporous layer formation to a conductive porous substrate, the coating ink is dried at a temperature of 60°C to 150°C, followed by heating it at a temperature of 250°C to 380°C to decompose and remove additives such as dispersants and thickeners and promote the melting of the hydrophobic resin. In this step, not only the hydrophobic resin present in the microporous layer but also the hydrophobic resin attached on the conductive porous substrate are melted to wetly spread over the surfaces of other constituent components such as carbon fibers, carbonized resins, and carbon microparticles. This serves to improve the drainage rates of both the conductive porous substrate and the microporous layer, and accordingly, they can work to produce a fuel cell that exhibits a high performance.

In this way, gas diffusion electrodes each having a conductive porous substrate and a microporous layer disposed thereon is obtained.

Next, the surface of the microporous layer disposed on a gas diffusion electrode is attached to each surface of a hydrocarbon based polymer electrolyte membrane that carries catalyst layers to produce a membrane electrode assembly (MEA). Good methods for assembly production include flat plate pressing and roll pressing, and an assembly may be produced while heating. Here, the two gas diffusion electrodes may be either identical to or different from each other.

The resulting MEA is then sandwiched between two separators having gas flow channels, i.e., one for the anode and the other for the cathode, to produce a fuel cell.

The channel in the anode-side separator has an inlet and an outlet for supplying hydrogen while the channel in the cathode-side separator has an inlet and an outlet for supplying air. Furthermore, the separators are made of a conductive material such as stainless steel and carbon, and therefore, electricity can be input or output if electric wires are connected. In addition, if a path that can supply circulation water into each separator, it will serve to maintain the cell at a specified temperature.

If about 200 to 500 fuel cells that are produced as described above are prepared and connected in series, they can work to generate power at a high voltage of 40 to 200 kV. Such a stack of fuel cells can be used as a power source for fuel cell vehicles etc.

### EXAMPLES

The present invention will be illustrated below in greater detail with reference to examples although the invention should not be construed as being limited to the embodiments described herein. The evaluation methods adopted in the examples and the preparation methods for the materials used in the examples were as described below. It should be noted that all evaluations were made based on one measurement (n = 1) unless otherwise specified for the number (n) of measurements taken.

### <Method for measurement of elastic modulus of electrolyte membrane>

An electrolyte membrane sample was cut out to a size of 10 mm × 30 mm and the length-directional ends were held. A tensile test was conducted to measure the relationship between stress and strain in an atmosphere at 23°C and 50%RH, and the elastic modulus was calculated from the slope of the curve up to 5% strain. Here, the measuring run was performed three times (n = 3).

### <Method for measurement of thickness of conductive porous substrate or gas diffusion electrode>

The thickness of a conductive porous substrate or a gas diffusion electrode was measured using a micrometer that applied a load of 0.15 MPa. Here, for each sample, measurements were taken at randomly selected nine points and their average was adopted to represent the thickness of the sample.

### <Method for measurement of spring property of gas diffusion electrode>

A gas diffusion electrode sample was cut out to a size of 40 mm × 40 mm and sandwiched between rigid metal plates having smooth surfaces, and the thickness of the gas diffusion electrode sample was measured while applying an average pressure of 1.0 MPa. Then, the thickness of the gas diffusion electrode sample was measured while applying an average pressure of 2.0 MPa, and the difference between the thickness measurements was adopted as its spring property. Here, the measuring run was performed three times (n = 3).

### <Method for measurement of arithmetic average roughness of surface of gas diffusion electrode>

The arithmetic average roughness (Ra) over a 5 mm long section on the surface of a gas diffusion electrode was measured using a laser microscope (VK-X3000, manufactured by Keyence Corporation). The Ra was measured at four randomly selected locations on a 30 mm × 30 mm test piece, and the average value was calculated. Here, the measuring run was performed three times (n = 3).

### <Method for measurement of F/C ratio of surface of gas diffusion electrode>

Using an X-ray photoelectron spectrometer (XPS, Model 5400, manufactured by ULVAC-PHI, Inc.), five points were selected randomly on the microporous layer surface of a gas diffusion electrode and elemental analysis was conducted. The elemental concentrations [%] of fluorine (F) and carbon (C) were determined, and the F/C ratio was calculated for the five points, followed by calculating their average.

### <Measurement of surface O/C ratio>

Using an X-ray photoelectron spectrometer (XPS, Model 5400, manufactured by ULVAC-PHI, inc.), five points were selected randomly on the microporous layer surface of a gas diffusion electrode and elemental analysis was conducted. The elemental concentrations [%] of oxygen (O) and carbon (C) were determined, and the O/C ratio was calculated for the five points, followed by calculating their average.

### <Method for evaluation for power generation performance of membrane electrode assembly>

Gas diffusion electrodes (cut to 5 cm × 5 cm) were disposed on the anode side and the cathode side of an electrolyte membrane having catalyst layers disposed thereon and subjected to hot-pressing under a pressure of 0.1 MPa at a temperature of 130°C for 20 minutes to produce a membrane electrode assembly (MEA). In this step, in the case where each gas diffusion layer had a microporous layer disposed thereon, it was laid in such a manner that the microporous layer came in contact with a catalyst layer. This MEA was assembled into a cell designed for a fuel cell and hydrogen and air were supplied to the anode side and the cathode side, respectively, while controlling the cell temperature at 70°C, followed by maintaining power generation for 3 hours at a current density of 1 A/cm². In this step, hydrogen and air were introduced into the cell to maintain a fuel utilization rate of 70%, an air utilization rate of 40%, while performing humidification with a hydrogen dew point of 59°C on the anode side, and an air dew point of 60°C on the cathode side. After 3 hour operation, the voltage was read as the power generation voltage and it was adopted to represent the power generation performance. Then, the high frequency resistance (HFR) of the cell was measured by the current interrupt method. The HFR represents the total value of electrical resistance and protonic resistance of the cell.

### <Carbon microparticles for microporous layer formation used in examples>

Carbon microparticle I: Tokablack (registered trade mark) #3800 (manufactured by Tokai Carbon Co., Ltd.)
Carbon microparticle II: Denka Black (registered trade mark) Powder (manufactured by Denka Company Limited)
Carbon microparticle III: Vulcan (registered trademark) FCX80 (manufactured by Cabot Corporation)

### <Method for production of polymer electrolyte membranes A and B>

### (Synthesis of 2,2-bis(4-hydroxyphenyl)-1,3-dioxolane (K-DHBP) represented by the general formula (G1) given below)

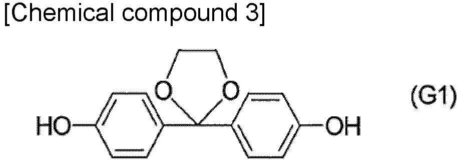

In a 500 ml flask equipped with a stirrer, thermometer, and distillation tube, 49.5 g of 4,4'-dihydroxybenzophenone, 134 g of ethylene glycol, 96.9 g of trimethyl orthoformate, and 0.50 g of p-toluenesulfonic acid monohydrate were fed and dissolved. Then, the solution was heated and maintained at 80°C for 2 hours while being stirred. Furthermore, the internal temperature was gradually increased to 120°C, and heating was continued until the distilling of methyl formate, methanol, and trimethyl orthoformate completely stopped. After cooling the reaction solution to room temperature, the reaction solution was diluted with ethyl acetate, and then the organic layer was washed with 100 ml of a 5% aqueous solution of potassium carbonate, followed by separating the liquid components and distilling the solvent. Then, 80 ml of dichloromethane was added to the residue to precipitate a crystalline material, followed by filtering and drying it to provide 52.0 g of 2,2-bis(4-hydroxyphenyl)-1,3-dioxolane, as represented by the above general formula (G1). The GC analysis of the crystalline material was performed and results showed it contained 99.9% 2,2-bis(4-hydroxyphenyl)-1,3-dioxolane and 0.1% 4,4'-dihydroxybenzophenone.

### (Synthesis of disodium-3,3'-disulfonate-4,4'-difluorobenzophenone represented by the general formula (G2) given below)

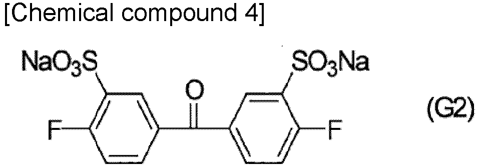

First, 109.1 g of 4,4'-difluorobenzophenone (manufactured by Sigma-Aldrich) was reacted in 150 mL of fuming sulfuric acid (50% SO₃) (manufactured by FUJIFILM Wako Pure Chemical Corporation) at 100°C for 10 hours. Then, the solution was gradually poured in a large volume of water, and after neutralizing the solution with NaOH, 200 g of sodium chloride was added to precipitate the synthesized material. The resulting precipitate was separated by filtration, followed by recrystallization in an aqueous ethanol solution to provide disodium-3,3'-disulfonate-4,4'-difluorobenzophenone, which is represented by the formula (G2) given above. The GC analysis of the crystalline material was performed and results showed it had a purity of 99.3%.

### (Synthesis of ionic group-free oligomer as represented by the general formula (G3) given below)

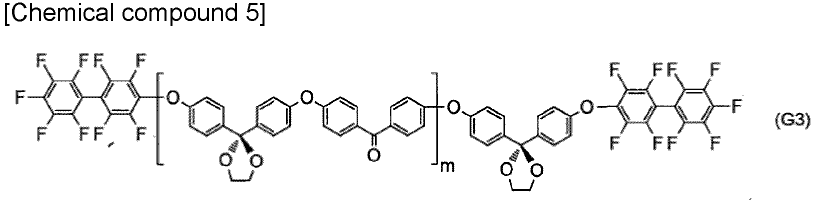

### (In the formula (G3), m represents a positive integer.)

To a 1,000 mL three neck flask equipped with a stirrer, a nitrogen gas supply tube, and a Dean-Stark trap, 16.59 g of potassium carbonate (manufactured by Sigma-Aldrich, 120 mmol), 25.8 g (100 mmol) of K-DHBP as represented by the general formula (G1) given above, and 20.3 g of 4,4'-difluorobenzophenone (manufactured by Sigma-Aldrich, 93 mmol) were fed, followed by nitrogen purge, dehydration in 300 mL of N-methyl-2-pyrrolidone and 100 mL of toluene at 160°C, heating to remove toluene, and polymerization at 180°C for 1 hour. The resulting material was purified by reprecipitation with a large amount of methanol to obtain an ionic group-free oligomer (having hydroxyl group at chain end). It had a number average molecular weight of 10,000.

To a 500 mL three neck flask equipped with a stirrer, nitrogen supply tube, and Dean-Stark trap, 1.1 g of potassium carbonate (manufactured by Sigma-Aldrich, 8 mmol) and 20.0 g (2 mmol) of the ionic group-free oligomer described above (having hydroxyl group at chain end) were fed, followed by nitrogen purge, dehydration in 100 mL of N-methyl-2-pyrrolidone (NMP) and 30 mL of toluene at 100°C, heating to remove toluene, adding 4.0 g of decafluorobiphenyl (Sigma-Aldrich reagent, 12 mmol), and maintaining a reaction at 105°C for 1 hour. The resulting material was purified by reprecipitation with a large amount of isopropyl alcohol to obtain an ionic group-free oligomer (having fluoro group at chain end) as represented by the formula (G3) given above. It had a number average molecular weight of 11,000.

### (Synthesis of ionic group-containing oligomer as represented by the general formula (G4) given below)

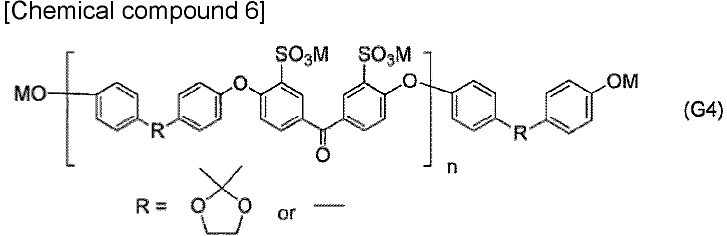

### (In the formula (G4), M represents Na or K.)

To a 1,000 mL three neck flask equipped with a stirrer, a nitrogen gas supply tube, and a Dean-Stark trap, 27.6 g of potassium carbonate (manufactured by Sigma-Aldrich, 200 mmol), 12.9 g (50 mmol) of K-DHBP as represented by the general formula (G1) given above, 9.3 g of 4,4'-biphenol (manufactured by Sigma-Aldrich, 50 mmol), 39.3 g (93 mmol) of disodium-3,3'-disulfonate-4,4'-difluorobenzophenone as represented by the general formula (G2) given above, and 17.9 g of 18-crown-6 (manufactured by FUJIFILM Wako Pure Chemical Corporation, 82 mmol) were fed, followed by nitrogen purge, dehydration in 300 mL of N-methyl-2-pyrrolidone and 100 mL of toluene at 170°C, heating to remove toluene, and polymerization at 180°C for 1 hour. The resulting material was purified by reprecipitation with a large amount of isopropyl alcohol to obtain an ionic group-containing oligomer as represented by the general formula (G4) given above. It had a number average molecular weight of 16,000.

### (Production of polymer electrolyte membrane)

To a 500 mL three-neck flask equipped with a stirrer, nitrogen supply tube, and Dean-Stark trap, 0.56 g of potassium carbonate (manufactured by Sigma-Aldrich, 4 mmol) and 16 g (1 mmol) of the ionic group-containing oligomer as represented by the general formula (G4) given above were fed, followed by nitrogen purge, dehydration in 100 mL of N-methyl-2-pyrrolidone and 30 mL of cyclohexane at 100°C, heating to remove cyclohexane, adding 11 g (1 mmol) of the ionic group-free oligomer as represented by the general formula (G3) given above, and maintaining a reaction at 105°C for 24 hour. The resulting material was purified by reprecipitation with a large amount of isopropyl alcohol to obtain a blockcopolymer of the ionic group-containing oligomer as represented by the general formula (G4) given above and the ionic group-free oligomer as represented by the general formula (G3) given above. It had a weight average molecular weight of 340,000.

The resulting block copolymer was dissolved to prepare a 5 mass% N-methyl-2-pyrrolidone solution, and it was fed in an Inverter Compact High-Speed Refrigerated Centrifuge manufactured by Kubota Manufacturing Corporation (Model 6930, equipped with an RA-800 angle rotor, 25°C, 30 minutes, centrifugal force 20,000 G), followed by performing direct centrifugal separation of the polymerization stock solution. The precipitated solid material (cake) and the supernatant liquid (coating liquid) were found to be separated completely and then, the supernatant liquid was recovered. Subsequently, it was subjected to distillation under reduced pressure while stirring at 80°C and then subjected to pressure filtration through a 1 µm polypropylene filter to provide a solution of a hydrocarbon based polymer electrolyte. The hydrocarbon based polymer electrolyte solution had a viscosity of 1,300 mPa·s. The hydrocarbon based polymer electrolyte solution prepared above was cast to coat a polyethylene terephthalate (PET) substrate, dried at 100°C for 4 hours, and heat-treated in nitrogen at 150°C for 10 minutes. It was immersed in a 10 mass% aqueous sulfuric acid solution at 95°C for 24 hours for proton substitution and deprotection reaction and then immersed in a large excess of pure water for 24 hours to ensure adequate washing to remove the membrane from the substrate, thereby providing a polymer electrolyte membrane A (membrane thickness 10 µm). The resulting polymer electrolyte membrane A had an elastic modulus of 2 GPa.

On the other hand, a polymer electrolyte membrane B (membrane thickness 10 µm) was prepared by using a 10 mass% dispersion liquid of Nafion (registered trade mark) (manufactured by Sigma-Aldrich), which is a fluorine based polymer electrolyte, instead of the hydrocarbon based polymer electrolyte used above. The resulting polymer electrolyte membrane B had an elastic modulus of 0.3 GPa.

### <Method for production of catalyst layer decal>

Using platinum catalyst-supporting carbon particles (TEC10E50E, manufactured by Tanaka Kikinzoku Kogyo K.K., Pt catalyst carrying rate 50 mass%) and a 10 mass% dispersion liquid of Nafion (registered trade mark) (manufactured by Sigma-Aldrich), which is a fluorine based polymer electrolyte, a catalyst coating solution was prepared in such a manner that the mass ratio between the platinum catalyst-supporting carbon particles and Nafion (registered trade mark) was 2:1. It was then spread over a commercially available polytetrafluoroethylene film in such a manner that the platinum supporting rate was 0.3 mg/cm², thereby providing a catalyst layer decal (catalyst thickness 8 µm).

### <Method for production of electrolyte membranes A and B having catalyst layers disposed thereon>

A catalyst layer decal produced according to the section <Method for production of catalyst layer decal> described above was cut to provide two 5 cm × 5 cm square samples. They were disposed in such a manner that they were opposed to each other and a polymer electrolyte membrane A (7 cm × 7 cm square) produced according to the section <Method for production of polymer electrolyte membranes A and B> described above was interposed between them. They were pressed at 5 MPa for 3 minutes while heating at 150°C to provide an electrolyte membrane A (7 cm × 7 cm square) having catalyst layers disposed thereon. In addition, from a polymer electrolyte membrane B, an electrolyte membrane B (7 cm × 7 cm square) having catalyst layers disposed thereon was produced by carrying out the same procedure.

### <Method for production of conductive porous substrates i to iii>

Polyacrylonitrile based carbon fiber Torayca (registered trademark) T300 manufactured by Toray Industries, Inc. (average fiber diameter 7 µm) was cut to a length of 12 mm, dispersed in water, and processed continuously by a papermaking technique to prepare a paper-like sheet, followed by spray coating with a 10 mass% aqueous solution of polyvinyl alcohol and drying to provide a long-size paper-like sheet of carbon fibers having an areal weight of 30 g/m². The polyvinyl alcohol attached to the fiber accounted for 20 parts by mass relative to 100 parts by mass of the paper-like sheet.

Next, scaly graphite (average particle diameter 5 µm), phenolic resin (a mixture of resol-type phenolic resin and novolac-type phenolic resin mixed in a mass ratio of 1:1), and methanol were mixed in a mass ratio of 5:10:85 to prepare a resin composition solution. Then, the resin composition solution was continuously applied by spray coating onto the paper-like sheet prepared above in such a manner that the total mass of the phenolic resin and the scaly graphite accounted for 130 parts by mass relative to 100 parts by mass of the carbon fibers present in the conductive porous substrate, followed by drying them at 100°C for 5 minutes.

Subsequently, in a press forming machine, the paper-like sheet having a resin composition attached thereto was sandwiched between upper and lower heated plates and subjected to heat compression treatment at 180°C for 5 minutes. Here, release paper was placed between the paper-like sheet and each heating plate so that the heated plates and the paper-like sheet would not adhere with each other. In addition, spacers were positioned along the peripheral edges of the upper and lower heated plates in order to adjust the thickness of the heat-compressed conductive porous substrate. Then, in a heating furnace, its carbonization was performed by heating it at 2,000°C in a nitrogen atmosphere.

Furthermore, a hydrophobic resin dispersion was prepared by mixing 5 parts by mass of a dispersion liquid of PTFE fine particles (Poliflon (registered trademark) D-210C, manufactured by Daikin Industries, Ltd.) and 95 parts by mass of deionized water and applied by spray coating, followed by drying it at 100°C for 5 minutes to produce a conductive porous substrate i that had a thickness of 160 µm under a pressure of 0.15 MPa and an areal weight of 50 g/m².

Subsequently, except that the long-size paper-like sheet made of carbon fibers had an areal weight of 20 g/m², the same procedure as described above was carried out to produce a conductive porous substrate ii that had an areal weight of 30 g/m² and a thickness of 100 µm. In addition, except that the paper-like sheet had an areal weight of 35 g/m² and that the press forming step was omitted, the same procedure as described above was carried out to produce a conductive porous substrate iii that had an areal weight of 60 g/m² and a thickness of 250 µm.

### (Example 1)

By using carbon microparticles I, which were used as the carbon microparticles, PTFE, which was a fluorinated resin and was used as the hydrophobic resin, Triton (registered trademark) X-100 (manufactured by Nacalai Tesque, Inc.), used as the dispersant, and water, used as the dispersion medium, a coating ink for microporous layer formation was prepared in such a manner that the blending ratio of carbon microparticles / PTFE resin / dispersant was 75 parts by mass / 25 parts by mass / 150 parts by mass and that the non-decomposable components (carbon microparticles and hydrophobic resin) accounted for 23 mass% of the total mass. Here, it should be noted that Poliflon (registered trademark) D-210C (manufactured by Daikin Industries, Ltd.), which is a dispersion liquid of PTFE particles in water, was used as the source of PTFE. During the preparation of the coating ink, furthermore, a planetary mixer was used to ensure uniform dispersion of the components of the coating ink.

A conductive porous substrate i was prepared according to the section <Method for production of conductive porous substrates i to iii> described above, and the coating ink for microporous layer formation prepared above was applied to it using a die coater. After drying it at 100°C for 10 minutes, it was heated at 350°C for 10 minutes to promote the adhesion between the hydrophobic resin and the carbon microparticles and to decompose and remove the dispersant etc., thereby providing a gas diffusion electrode. Here, the amount of the coating ink was adjusted so that the microporous layer would have an areal weight of 20 g/cm² after heating.

The thickness of the resulting gas diffusion electrode was 180 µm, and the arithmetic average roughness of the microporous layer-side surface was 7 µm. In addition, the F/C ratio of the microporous layer-side surface was 0.3, and the O/C ratio was 0.006. Furthermore, the spring property of the gas diffusion electrode was 5.9 µm.

Then, an electrolyte membrane A having catalyst layers disposed thereon was produced according to the section <Method for production of electrolyte membranes A and B> given above and its power generation performance was evaluated according to the section <Method for evaluation for power generation performance of membrane electrode assembly>. It was found to have a high power generation performance of 0.72 V. In addition, it had a HFR of 70 mΩ·cm².

### (Examples 2 to 4 and Comparative examples 1 to 5)

Except that the types of the electrolyte membrane having catalyst layers disposed thereon and the conductive porous substrate, the type of the carbon microparticles used for forming microporous layers, and the areal weight of the microporous layers were as shown in Table 1 and Table 2, the same procedure as described in Example 1 was carried out to evaluate the power generation performance of the membrane electrode assemblies produced. Results are given in Table 1 and Table 2.

### (Comparative example 6)

Except that MB30, manufactured by AvCarb, was adopted as the gas diffusion electrodes, the same procedure as described in Example 1 was carried out to evaluate the power generation performance of the membrane electrode assembly produced. Results are given in Table 2. It should be noted that analysis or measurement was not performed for properties that correspond to the cells including "-".

### [Table 1]

**[Table 1]**

| | | | Example 1 | Example 2 | Example 3 | Example 4 |
|---|---|---|---|---|---|---|
| polymer electrolyte membrane | | type | A | A | A | A |
| | | elastic modulus (GPa) | 2 | 2 | 2 | 2 |
| | | thickness (µm) | 10 | 10 | 10 | 10 |
| gas diffusion electrode | conductive porous substrate | type | i | i | ii | i |
| | | thickness (µm) | 160 | 160 | 100 | 160 |
| | microporous layer | type of carbon microparticle | I | I | II | II |
| | | areal weight (g/m²) | 20 | 40 | 20 | 20 |
| | | arithmetic average roughness (µm) | 7 | 6 | 5 | 3 |
| | | F/C ratio | 0.3 | 0.4 | 0.4 | 0.3 |
| | | O/C ratio | 0.006 | 0.007 | 0.005 | 0.004 |
| | thickness of gas diffusion electrode (µm) | | 180 | 200 | 120 | 180 |
| | spring property of gas diffusion electrode (µm) | | 5.9 | 6.2 | 4.1 | 5.8 |
| evaluation results | | power generation performance (V) | 0.72 | 0.70 | 0.70 | 0.70 |
| | | HFR (mΩ·cm²) | 70 | 75 | 70 | 73 |

### [Table 2]

**[Table 2]**

| | | | Comparative example 1 | Comparative example 2 | Comparative example 3 | Comparative example 4 | Comparative example 5 | Comparative example 6 |
|---|---|---|---|---|---|---|---|---|
| polymer electrolyte membrane | | type | B | B | A | A | A | A |
| | | elastic modulus (GPa) | 0.3 | 0.3 | 2 | 2 | 2 | 2 |
| | | thickness (µm) | 15 | 15 | 10 | 10 | 10 | 10 |
| gas diffusion electrode | conductive porous substrate | type | i | i | i | i | iii | - |
| | | thickness (µm) | 160 | 160 | 160 | 160 | 250 | - |
| | microporou s layer | type of carbon microparticle | I | III | III | I | I | - |
| | | areal weight (g/m²) | 20 | 20 | 20 | 10 | 20 | - |
| | | arithmetic average roughness (µm) | 7 | 13 | 13 | 8 | 8 | 12 |
| | | F/C ratio | 0.3 | 0.5 | 0.5 | 0.4 | 0.3 | 0.4 |
| | | O/C ratio | 0.006 | 0.007 | 0.007 | 0.005 | 0.005 | 0.004 |
| | thickness of gas diffusion electrode (µm) | | 180 | 180 | 180 | 170 | 270 | 200 |
| | spring property of gas diffusion electrode (µm) | | 5.9 | 6.4 | 6.4 | 5.6 | 7.2 | 1.9 |
| evaluation results | | power generation performance (V) | 0.64 | 0.63 | 0.65 | 0.68 | 0.66 | 0.66 |
| | | HFR (mΩ·cm²) | 77 | 79 | 88 | 82 | 83 | 85 |

## Claims

1. A membrane electrode assembly comprising a hydrocarbon based polymer electrolyte membrane having a catalyst layer and a gas diffusion electrode disposed in this order on each surface of the hydrocarbon based polymer electrolyte membrane, the surface of each gas diffusion electrode that faces a catalyst layer having an arithmetic average roughness of 7 µm or less.

2. A membrane electrode assembly as set forth in claim 1, wherein each gas diffusion electrode is configured to have a conductive porous substrate and a microporous layer disposed thereon and wherein the surface of the gas diffusion electrode that faces the neighboring catalyst layer is the microporous layer-side surface of the gas diffusion electrode.

3. A membrane electrode assembly as set forth in either claim 1 or 2, wherein the hydrocarbon based polymer electrolyte membrane has an elastic modulus of 1 to 3 GPa at 23°C and 50%RH.

4. A membrane electrode assembly as set forth in either claim 1 or 2, wherein the hydrocarbon based polymer electrolyte membrane contains a hydrocarbon based polymer electrolyte having a structural unit as represented by the general formula (S1) given below: 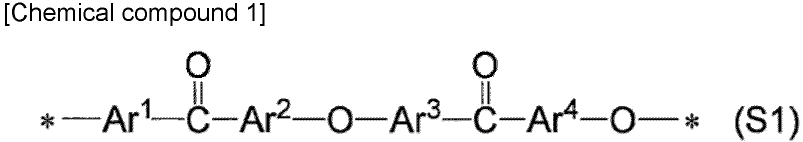 wherein in the general formula (S1), Ar¹ to Ar⁴ each denote an appropriately selected divalent arylene group, Ar¹ and/or Ar² each containing an ionic group, Ar³ and Ar4 each containing or not containing an ionic group, Ar¹ to Ar⁴ being optionally substituted appropriately and optionally independently containing two or more arylene groups, and the symbol * signifying a bonding site to a constituent unit as represented by the general formula (S1) or to other constituent units.

5. A membrane electrode assembly as set forth in either claim 1 or 2, wherein the gas diffusion electrode has a thickness of 130 to 190 µm.

6. A membrane electrode assembly as set forth in either claim 1 or 2, wherein the gas diffusion electrode has a spring property of 3 to 7 µm.

7. A membrane electrode assembly as set forth in either claim 1 or 2, wherein the surface of the gas diffusion electrode that faces a catalyst layer has a fluorine to carbon ratio (F/C ratio) of 0.06 to 0.4.

8. A membrane electrode assembly as set forth in either claim 1 or 2, wherein the surface of the gas diffusion electrode that faces a catalyst layer has an oxygen to carbon ratio (O/C ratio) of 0.05 or less.

9. A fuel cell comprising a membrane electrode assembly as set forth in either claim 1 or 2.
